# EUROPÄISCHE PATENTANMELDUNG

(11) **EP 4 039 739 A1**
(43) Veröffentlichungstag der Anmeldung: **10.08.2022**
(21) Anmeldenummer: 21208957.7
(22) Anmeldetag: 18.11.2021
(51) Int. Cl.: C08K 9/04, C08L 95/00, C04B 26/26

(54) **BITUMENMISCHUNG**

(30) Priorität: 20.11.2020 DE 102020130714
(71) Anmelder: Eurovia Services GmbH, 46240 Bottrop (DE)
(72) Erfinder: Johannsen, Knut Martin, 45968 Gladbeck (DE); Willmeroth, Kay Peter, 45329 Essen (DE)
(74) Vertreter: Freiherr von Foullon, Alexander

(57) **Zusammenfassung**

Die vorliegende Erfindung betrifft eine Bitumenmischung, enthaltend einen Naturasphalt und ein Modifizierungsmittel, die insbesondere zur Herstellung eines Asphalts geeignet ist.

## Beschreibung

Die vorliegende Erfindung betrifft das technische Gebiet des Bauwesens, insbesondere des Straßenbaus, sowie speziell Bitumenmischungen, die für die Herstellung von Asphalten geeignet sind.

Insbesondere betrifft die vorliegende Erfindung eine Bitumenmischung sowie die Verwendung der Bitumenmischung zur Herstellung eines Asphalts.

Des Weiteren betrifft die vorliegende Erfindung ein Verfahren zur Herstellung einer Bitumenmischung.

Weiterhin betrifft die vorliegende Erfindung ein Modifizierungsmittel sowie die Verwendung dieses Modifizierungsmittels zur Herstellung einer Bitumenmischung.

Darüber hinaus betrifft die vorliegende Erfindung einen Asphalt, der eine Bitumenmischung enthält, sowie die Verwendung des Asphalts im Baubereich und im Straßenbau.

Schließlich betrifft die vorliegende Erfindung ein Verfahren zur Herstellung eines Asphalts.

Generell finden Bitumen und Bitumenmischungen vielfältigen Einsatz im Bauwesen, insbesondere im Asphaltstraßenbau oder in der Abdichtungstechnik. Dies basiert auf den grundsätzlich besonderen Stoffeigenschaften von Bitumen, wie etwa einer hohen Witterungsbeständigkeit, Chemikalienbeständigkeit, Wasserfestigkeit und -dichtigkeit, einer dauerhaften Verklebbarkeit mit einer Vielzahl von mineralischen und metallischen Werkstoffen sowie nicht zuletzt einem hervorragendem Preisleistungsverhältnis.

Insbesondere im Bereich des Straßenbaus bildet Bitumen als Bindemittel zusammen mit einer Gesteinskörnung als Füllstoff die essentiellen Bestandteile von Asphaltmassen. Am häufigsten wird Asphalt dabei zur Befestigung von Bodenflächen verwendet. Dies kann sowohl als Heißeinbau als auch in Kaltbauweise vorgenommen werden, so dass je nach Verwendung sehr unterschiedliche Anforderungen an die verwendete Asphaltmasse gestellt werden.

Heiß zu verarbeitende Asphaltmassen sind allerdings unter ökologischen Aspekten sowie auch im Hinblick auf die Arbeitssicherheit und Kosteneffizienz, insbesondere für Transport und Ladungssicherung, als nachteilig zu bewerten. Speziell ist es notwendig, Heißasphaltmassen von dem Moment ihrer Herstellung bis hin zu ihrem Auftrag auf die zu befestigende Bodenfläche bei hohen Temperaturen flüssig sowie gleichmäßig durchmischt zu halten; im Fall von Gussasphalten etwa bei über 200 °C. Hierfür sind dementsprechend sowohl spezielle Mischanlagen als auch Transportbehälter notwendig.

Vor diesem Hintergrund wurden kalt verarbeitbare Asphalte und Bitumenmischungen entwickelt. Die entsprechenden Mischungen zeichnen sich insbesondere dadurch aus, dass sie bei Umgebungstemperatur hergestellt oder aber zumindest nach ihrer Herstellung auf Umgebungstemperaturen abgekühlt und vor allem bei diesen verarbeitet werden können. Dieser Aspekt erleichtert insbesondere den Transport der kalt verarbeitbaren Asphalt- bzw. Bitumenmassen und erhöht auch die Arbeitssicherheit im Umgang mit diesen.

Beispielsweise betrifft die EP 0 999 237 A1 eine Bitumenmischung, welche kalt herstellbar und kalt verarbeitbar ist Hierbei werden Aggregate, insbesondere Gesteinsmischungen, mit einem pulverförmigen Bitumen, beispielsweise Naturasphalt, und einem Pflanzenöl bzw. dessen Ester versetzt.

Kalt verarbeitbare Bitumenmischungen sind jedoch kostenintensiv in der Herstellung und oftmals hinsichtlich ihrer Eigenschaften, insbesondere der Widerstandsfähigkeit gegenüber Schubspannungen oder Witterungseinflüssen, konventionellen, d.h. bei hohen Temperaturen hergestellten, gelagerten und verarbeiteten Bitumenmischungen unterlegen, weshalb kalt verarbeitbare Bitumenmischungen im Allgemeinen nicht großflächig verwendet werden, sondern vorrangig zu Reparaturzwecken dienen.

Eine Möglichkeit zur gezielten Beeinflussung der Eigenschaften von Asphaltmischungen stellt die Verwendung polymermodifizierter Bitumen dar. Hierbei sind im Stand der Technik sowohl die Polymermodifikation der Bitumenbestandteile durch chemische Reaktion selbst sowie auch das Untermischen von Polymerzusammensetzungen, welche während der Aushärtung des Bitumens beispielsweise vernetzen, unter eine Bitumenmasse bekannt.

So betrifft die US 5,719,215 A etwa ein Verfahren zur Behandlung von Asphalt mit einer Mischung aus Gummi und Öl zur Herstellung einer heißlagerungsbedürftigen Bitumenmischung. Hierzu werden Gummipartikel in Öl gequollen, erhitzt und teilweise gelöst. Diese Mischung wird anschließend so lange in heißes Bitumen eingearbeitet, bis keine Gummipartikel mehr nachgewiesen werden können. Das Vorhandensein restlicher Gummipartikel ist allerdings nur wenig verlässlich festzustellen. Außerdem können im Zuge der Abkühlung bzw. Aushärtung der Bitumenmischung Gummiagglomerate entstehen, die die Eigenschaften des Asphalts negativ beeinflussen.

Der Zusatz von Polymeren trägt in der Regel insbesondere zur Optimierung und Feinregulation der mechanischen Eigenschaften von Bitumenmischungen bei und resultiert beispielsweise in guten elastischen Eigenschaften. Außerdem kann der Temperaturbereich, in dem gute mechanische Eigenschaften und dementsprechend eine gute Verarbeitbarkeit der Polymerbitumenmischung beobachtet werden, durch die Polymermodifikation erweitert werden.

Problematisch kann jedoch die Lagerstabilität polymermodifizierter Bitumenmischung sein, was sich insbesondere in einem Entmischen der Bitumenzusammensetzung niederschlagen kann. Darüber hinaus sind Polymerbitumenmischungen im Allgemeinen empfindlich gegenüber Feuchtigkeit, was wiederum hohe Ansprüche an die Lagerbedingungen für Polymerbitumenmassen stellt.

Vor dem Hintergrund einer zunehmenden Belastung von Asphalt- bzw. Straßenbelägen durch ein konstant zunehmendes Verkehrsaufkommen sowie klima- bzw. wetterbedingt stärker ausgeprägte Temperaturschwankungen und extremere Wetterphänomene, tritt - ungeachtet der Weiterentwicklungen im Bereich der Asphalt- bzw. Bitumenmodifizierung und -zusammensetzung - eine stetige Zunahme von Straßenschäden durch Ermüdungserscheinungen wie Rissbildung, Bruchstellenbildung und erhöhten Abrieb der Asphalt- bzw. Straßenbeläge auf.

Es fehlt somit weiterhin im Stand der Technik an Bitumenmischungen, welche unkompliziert an die jeweiligen Erfordernisse angepasst und nach Möglichkeit unmittelbar vor Ort, d.h. auf der Baustelle, hergestellt werden können, so dass Lagerung und Transport der heißen Bitumenmischungen entfallen können.

Eine Aufgabe der vorliegenden Erfindung ist somit darin zu sehen, die zuvor genannten mit dem Stand der Technik verbundenen Nachteile und Probleme zu vermeiden, zumindest jedoch abzuschwächen.

Wiederum eine weitere Aufgabe der vorliegenden Erfindung ist darin zu sehen, eine Bitumenmischung bereitzustellen, die sich in zuverlässiger Weise durch gute mechanische Eigenschaften auszeichnet und einfach an den jeweiligen Anwendungszweck angepasst werden kann.

Eine weitere Aufgabe der vorliegenden Erfindung besteht darin, ein System zur Verfügung zu stellen, dass die Bereitstellung und Herstellung von Bitumenmischungen und Asphalten unmittelbar am Anwendungsort ermöglicht.

Gegenstand der vorliegenden Erfindung gemäß einem ersten Aspekt der vorliegenden Erfindung ist somit eine Bitumenmischung nach Anspruch 1; weitere vorteilhafte Ausgestaltung dieses Erfindungsaspektes sind Gegenstand der diesbezüglichen Unteransprüche.

Weiterer Gegenstand der vorliegenden Erfindung gemäß einem zweiten Aspekt der vorliegenden Erfindung ist eine Verwendung der erfindungsgemäßen Bitumenmischung nach Anspruch 5.

Wiederum weiterer Gegenstand der vorliegenden Erfindung gemäß einem dritten Aspekt der vorliegenden Erfindung ist ein *Kit-of-Parts* zur Herstellung der erfindungsgemäßen Bitumenmischung nach Anspruch 6.

Wiederum weiterer Gegenstand der vorliegenden Erfindung gemäß einem vierten Aspekt der vorliegenden Erfindung ist ein Modifizierungsmittel nach Anspruch 7; weitere vorteilhafte Ausgestaltungen dieses Erfindungsaspektes sind Gegenstand des diesbezüglichen Unteranspruchs.

Des Weiteren ist ein Gegenstand der vorliegenden Erfindung gemäß einem fünften Aspekt der vorliegenden Erfindung eine Verwendung des erfindungsgemäßen Modifizierungsmittels nach Anspruch 9.

Weiterer Gegenstand der vorliegenden Erfindung gemäß einem sechsten Aspekt der vorliegenden Erfindung ist ein Verfahren zur Herstellung eines Modifizierungsmittels nach Anspruch 10; weitere vorteilhafte Ausgestaltungen dieses Erfindungsaspektes sind Gegenstand der diesbezüglichen Unteransprüche.

Wiederum weiterer Gegenstand der vorliegenden Erfindung gemäß einem siebten Aspekt der vorliegenden Erfindung ist ein Verfahren zur Herstellung einer Bitumenmischung nach Anspruch 14.

Wiederum weiterer Gegenstand der vorliegenden Erfindung gemäß einem achten Aspekt der vorliegenden Erfindung ist ein Asphalt nach Anspruch 15.

Des Weiteren ein Gegenstand der vorliegenden Erfindung gemäß einem neunten Aspekt der vorliegenden Erfindung ist eine Verwendung des erfindungsgemäßen Asphalts nach Anspruch 16.

Schließlich ist ein weiterer Gegenstand der vorliegenden Erfindung gemäß einem zehnten Aspekt der vorliegenden Erfindung ein Verfahren zur Herstellung eines Asphalts nach Anspruch 17.

Es versteht sich von selbst, dass Besonderheiten, Merkmale, Ausgestaltungen und Ausführungsformen sowie Vorteile oder dergleichen, die nachfolgend - zu Zwecken der Vermeidung von unnötigen Wiederholungen - nur zu einem Erfindungszweck ausgeführt werden, selbstverständlich in Bezug auf die übrigen Erfindungsaspekte entsprechend gelten, ohne dass es einer ausdrücklichen Erwähnung bedarf.

Zudem gilt, dass alle im Folgenden genannten Werte- oder Parameterangaben oder dergleichen grundsätzlich mit genormten bzw. standardisierten oder explizit angegebenen Bestimmungsverfahren oder mit dem Fachmann auf diesem Gebiet an sich geläufigen Bestimmungsmethoden ermittelt bzw. bestimmt werden können.

Darüber hinaus versteht es sich von selbst, dass alle gewichts- oder mengenbezogenen Prozentangaben vom Fachmann derart ausgewählt werden, dass in der Summe 100% bzw. 100 Gew.-% resultieren; dies versteht sich jedoch von selbst.

Dies vorausgeschickt wird im Folgenden die vorliegende Erfindung näher beschrieben.

Gegentand der vorliegenden Erfindung ist somit - gemäß einem **ersten** Aspekt der vorliegenden Erfindung - eine Bitumenmischung, enthaltend
a) einen Naturasphalt und
b) ein Modifizierungsmittel,
wobei das Modifizierungsmittel mindestens ein Polymer und mindestens eine unpolare, hydrophobe und vorzugsweise viskose Flüssigkeit aufweist oder hieraus besteht.

Denn, wie die Anmelderin überraschenderweise herausgefunden hat, kann mit erfindungsgemäßen Bitumenmischungen in einfacher und kostengünstiger Weise eine polymermodifizierte Bitumenmischung bereitgestellt werden, die problemlos für verschiedenste Anwendungszwecke konfektioniert werden kann, beispielsweise durch die Wahl des Modifizierungsmittels oder des Verhältnisses von Naturasphalt zu Modifizierungsmittel.

Speziell ist es möglich, die erfindungsgemäße Bitumenzusammensetzung nach Bedarf, d. h. zum Einsatzzeitpunkt und/oder am Einsatzort, bereitzustellen, indem vordosierte Mengen der Mischungskomponenten, insbesondere Naturasphalt und Modifizierungsmittel, einfach bei höheren Temperaturen miteinander vermischt werden, bis eine homogene Verteilung der Komponenten in der Bitumenmischung erreicht ist. Damit kann der Aufwand für die Aufrechterhaltung hoher Temperaturen bei Lagerung und Transport gegenüber herkömmlichem Bitumen deutlich gesenkt bzw. vermieden werden und die Sicherheit für Arbeiter, die die Bitumenmischung herstellen bzw. verwenden kann im Vergleich zu herkömmlichen Bitumenmischungen maßgeblich gesteigert werden.

Durch den modularen, mehrkomponentigen Aufbau der erfindungsgemäßen Bitumenmischung wird es möglich, ein auf den jeweiligen Anwendungsfall abgestimmtes Bindemittel, nämlich eine Bitumenmischung, für Asphalte bereitzustellen. Bislang mussten für unterschiedliche Anwendungen stets unterschiedliche Bitumen bereitgehalten werden; die vorliegende Erfindung ermöglicht hingegen die Herstellung speziell abgestimmter Bitumenmischungen aus wenigen Komponenten, nämlich Naturasphalt und Modifizierungsmittel, nach dem Baukastenprinzip. Insbesondere die Modifizierung von Bitumen mit Polymeren war bislang stets aufwendig und problematisch; mit dem erfindungsgemäß verwendeten Modifizierungsmittel kann nun jedoch in einfacher Weise eine gewünschte, individuell abstimmbare Polymermodifizierung erreicht werden.

Die deutlich erleichterten Verarbeitungs- und Lagerbedingungen tragen wirksam zu einem als insgesamt ressourcenschonend zu bewertenden Herstellungsverfahren bzw. Erzeugnis bei, so dass die erfindungsgemäße Bitumenmischung, so wie auch ihr Herstellungsverfahren, auch hinsichtlich des Aspekts der Umweltschonung, als positiv und vorteilhaft zu bewerten sind.

Weiterhin wirkt sich auch die Möglichkeit, wonach die erfindungsgemäße Bitumenmischung sowie insbesondere das enthaltene Modifizierungsmittel aus natürlichen bzw. rezyklierten Rohstoffen und Bestandteilen zusammengesetzt sein können, besonders vorteilhaft aus. Auf diese Weise kann eine Bitumenmischung bereitgestellt werden, die nicht nur auf Grundlage ihres Herstellungsverfahrens, sondern auch im Hinblick auf die eingesetzten Ausgangsstoffe als umweltschonend bzw. - freundlich eingestuft werden kann.

Idealerweise können die Rohstoffe, welche beispielsweise in dem erfindungsgemäßen Modifizierungsmittel enthalten sind, auch als Nebenprodukte anderer Produktionsprozesse anfallen, so dass mit der Verwertung dieser Nebenprodukte im Rahmen der vorliegenden Erfindung auch eine besondere Wertschöpfung erreicht werden kann. Insbesondere werden keine Ressourcen verbraucht, die anderweitig, beispielsweise für die Nahrungs- oder Futtermittelherstellung, Verwendung fänden.

Ein weiterer wesentlicher Vorteil der vorliegenden Erfindung ist darin zu sehen, dass mit der erfindungsgemäßen Bitumenmischung - je nach deren Zusammensetzung - auch gezielt die Eigenschaften von Asphalten, beispielsweise im Hinblick auf die Einstellung eines bestimmten Härtegrades, gesteuert werden können. Auf Basis des flexiblen Herstellungsverfahrens ist eine bedarfsspezifische Abstimmung der Bitumenmischung hinsichtlich der eingesetzten Mengen von Naturasphalt und Modifizierungsmittel leicht und direkt möglich. So kann je nach Anwendung eine optimal zusammengesetzte Bitumenmischung, beispielsweise zur Verwendung als Bindemittel in Asphaltbelägen, zur Verfügung gestellt werden.

Ein weiterer erfindungswesentlicher Vorteil geht außerdem auf das in der Bitumenmischung enthaltene Modifizierungsmittel, welches eine der beiden Hauptkomponenten der erfindungsgemäßen Bitumenmischung bildet, zurück. Durch die spezielle Zusammensetzung des Modifizierungsmittels, welches mindestens ein Polymer und mindestens eine unpolare, hydrophobe und vorzugsweise viskose Flüssigkeit aufweist, wird eine weitere Modifizierungsvariante zur Herstellung von Bitumen hinzugefügt, durch welche Eigenschaften in die Bitumenmischung eingebracht werden können, die über die Eigenschaften herkömmlicher Bitumen hinausgehen.

Je nach Grad und Art der Polymermodifizierung kann beispielsweise Einfluss auf die Härte der Bitumenmischung genommen werden. Damit können im Rahmen der vorliegenden Erfindung Bitumenmischungen erhalten werden, die in vielerlei Hinsicht bedarfsgenau und anwendungsorientiert zielgerichtet eingestellt werden können, wobei dies insbesondere im Rahmen eines einfachen sowie gleichzeitig umweltfreundlichen Herstellungsverfahrens erfolgt.

Mit der erfindungsgemäßen Bitumenmischung sind insbesondere Asphalte, die beispielsweise als Asphaltbeläge für Straßen verwendet werden können, zugänglich, welche eine vergleichsweise hohe Härte und niedrige Viskosität aufweisen. Damit eignen sich diese Asphalte für Anwendungen bei denen vergleichsweise hohe Punktbelastungen auftreten, wie beispielsweise bei Industrieflächen. Besonders geeignet sind diese Asphalte jedoch für Anwendungen mit hohen Schubspannungen, beispielsweise im Straßenbau. Hierunter fallen insbesondere etwa Beschleunigungs- oder Verzögerungsspuren, wie etwa auf Autobahnen üblich, auf denen innerhalb kurzer Distanzen hohe Beschleunigungs- bzw. Bremskräfte auf den Straßenbelag einwirken. Diese können unter anderem zu Deformationen des Straßenbelags führen. Mit der erfindungsgemäßen Bitumenmischung bzw. damit hergestellten Asphalten kann dies wirkungsvoll verhindert bzw. zumindest reduziert werden, so dass eine längere Haltbarkeit von beispielsweise Straßenbelägen resultiert.

Unter dem Begriff Bitumen wird im Rahmen der vorliegenden Erfindung ein kolloidales System, das aus verschiedenen aromatischen und/oder, insbesondere langkettigen, aliphatischen Kohlenwasserstoffen gebildet wird, verstanden. Bitumen zeigt im Allgemeinen ein temperaturabhängiges viskoelastisches Verhalten und zeichnet sich weiterhin dadurch aus, dass das Stoffgemisch nahezu nicht flüchtig, tendenziell klebrig sowie gegenüber Wasser gut abdichtend wirkt.

Das kolloidale System enthält als Dispersionsmittel im Allgemeinen zähflüssige, hochviskose, wenig polarisierte Öle aus tendenziell flüchtigen aliphatischen Kohlenwasserstoffen, die insbesondere die sogenannten Maltene bzw. Maltenphase bilden. Darin dispergiert sind schwerflüchtige, makromolekulare, heteroatomare Verbindungen aus kondensierten aromatischen Kohlenwasserstoffen und/oder langkettigen aliphatischen Kohlenwasserstoffen, welche die sogenannten Asphaltene bzw. Asphaltenphase, einschließlich sogenannter Erdölharze, bilden. In den Asphaltenen gebundene Heteroatome können unter anderem Schwefel, Sauerstoff und/oder Stickstoff sowie Spuren von Metallen sein. Gemäß DIN 51595 werden die zwischen Temperaturen von 18 bis 28 °C unlöslichen Bestandteile einer 30-fach mit n-Heptan verdünnten Rohölprobe als Asphaltene definiert.

Darüber hinaus wird im Rahmen der vorliegenden Erfindung unter einem Naturasphalt ein natürlich entstandener Rohstoff verstanden, der sich aus Naturbitumen sowie unlöslichen anorganischen Mineralstoffen und geringeren Anteilen von Wasser und/oder Gasen zusammensetzt. Das im Naturasphalt enthaltene Naturbitumen ist beispielsweise ein Produkt aus der Verflüchtigung und/oder Degradation leichterer Erdölbestandteile aus erdoberflächennahem Erdöl. In der Folge kommt es zu einer Verschiebung des Verhältnisses zwischen Maltenen und Asphaltenen, d. h. zwischen flüchtigen Alkanen und schwerflüchtigen Alkanen und zyklischen Kohlenwasserstoffen, zugunsten der Asphaltene bzw. schwerflüchtigen Alkane und zyklischen Kohlenwasserstoffe, unter Umständen bis hin zum völligen Verlust der Maltene.

Erfindungsgemäß bevorzugt werden nun solche Naturasphalte, die sich dadurch auszeichnen, dass sie einen geringen Anteil unlöslicher anorganischer Mineralstoffe aufweisen. Demgemäß ist es also im Rahmen der vorliegenden Erfindung bevorzugt, wenn der Naturasphalt einen vergleichsweisen hohen Anteil an Naturbitumen enthält.

Darüber hinaus hat es sich bevorzugt bewährt, wenn der Naturasphalt dadurch gekennzeichnet ist, dass der Naturasphalt, insbesondere die Asphaltenphase, zumindest im Wesentlichen frei, insbesondere frei, von aromatischen Kohlenwasserstoffen ist. Demgemäß zeichnen sich erfindungsgemäß bevorzugte Naturasphalte dadurch aus, dass der Naturasphalt, insbesondere die Asphaltenphase, überwiegend, insbesondere ausschließlich, langkettige aliphatische Kohlenwasserstoffe enthält.

Üblicherweise ist es im Rahmen der vorliegenden Erfindung vorgesehen, dass der Naturasphalt ausgewählt ist aus der Gruppe von Albertit, Asphaltit, Gilsonit, Grahamit, Impsonit, Leyteit, Libollit, McKittrit, Nigrit, Rafealit, Tabbyit, Uintahit, Wurtzilit, deren Raffinaten und/oder deren Mischungen, insbesondere aus Asphaltit, Gilsonit, Grahamit, Uintahit, deren Raffinaten und deren Mischungen.

Im Rahmen einer ganz besonders bevorzugten Ausführungsform der vorliegenden Erfindung ist der Naturasphalt aus der Gruppe von Asphaltit, Gilsonit, Uintahit, deren Raffinaten und deren Mischungen ausgewählt. Speziell diese Naturasphaltsorten zeichnen sich insbesondere durch einen hohen Anteil langkettiger aliphatischer Kohlenwasserstoffe aus, wohingegen der Anteil aromatischer Kohlenwasserstoffe äußerst gering ist. Darüber hinaus ist es besonders vorteilhaft, dass diese Naturasphalte vergleichsweise geringe Mengen unlöslicher anorganischer Bestandteile aufweisen, wie im Rahmen der vorliegenden Erfindung bevorzugt.

Im Hinblick auf das Modifizierungsmittel ist es im Rahmen der vorliegenden Erfindung üblicherweise vorgesehen, dass das Modifizierungsmittel in flüssiger Form, insbesondere unter den Verfahrensbedingungen für die Herstellung des Modifizierungsmittels bzw. der Bitumenmischung, vorliegt.

Hierbei ist der Begriff "flüssig" im Rahmen der vorliegenden Erfindung weit gefasst und betrifft fließfähige Stoffe bzw. Substanzen im Allgemeinen. Somit sind im Rahmen der vorliegenden Erfindung beispielsweise auch sehr zähfließende bzw. hochviskose Stoffe bzw. Substanzen unter der Bezeichnung "flüssig" bzw. auch "Flüssigkeit" miterfasst.

Unter einem hochviskosen Stoff bzw. einer hochviskosen Flüssigkeit wird dabei im Rahmen der vorliegenden Erfindung insbesondere ein Stoff bzw. eine Flüssigkeit verstanden, der bzw. die eine Viskosität bei Raumtemperatur im Bereich von mehr als 10³ mPa • s, insbesondere mehr als 10⁴ mPa • s, bestimmt nach DIN EN ISO 2431: 2011, aufweist. Eine viskose Flüssigkeit im Sinne der vorliegenden Erfindung meint eine Flüssigkeit, deren Viskosität bei Raumtemperatur im Bereich von 1 bis 10⁴ mPa • s bestimmt nach DIN EN ISO 2431: 2011 liegt.

Unter einer unpolaren Flüssigkeit wird im Rahmen der vorliegenden Erfindung eine solche Flüssigkeit verstanden, die sich aus Stoffen bzw. Molekülen zusammensetzt, die in ihrer molekularen Gesamtheit nach außen hin ein Gesamtdipolmoment von nahezu Null, insbesondere Null, aufweisen. Ein unpolarer Stoff im Sinne der vorliegenden Erfindung ist beispielsweise eine langkettige Carbonsäure, bei welcher die polaren Eigenschaften der Carboxylgruppe durch die unpolaren Eigenschaften der Alkylkette kompensiert werden, so dass die Carbonsäure in ihrer molekularen Gesamtheit nach außen hin ein Gesamtdipolmoment von nahezu Null hat.

Unter einer hydrophoben Substanz bzw. Flüssigkeit wird im Rahmen der vorliegenden Erfindung eine solche Flüssigkeit verstanden, die sich aus Stoffen bzw. Molekülen zusammensetzt, die sich nicht mit Wasser mischen lassen bzw. in einem wässrigen Medium Zusammenschlüsse bilden auf Grund der Abstoßung zwischen polaren Wassermolekülen und unpolaren Molekülen der Flüssigkeit, so wie beispielsweise Öl in Wasser Tröpfchen bzw. eine aufliegende Schicht bildet.

Weiterhin wird im Rahmen der vorliegenden Erfindung unter einem Polymer eine chemische Verbindung verstanden, die aus kettenförmigen oder verzweigten Molekülen bzw. Makromolekülen besteht, die aus gleichen oder gleichartigen Einheiten, sogenannten Monomeren, bestehen. Die Anzahl der sich wiederholenden Einheiten bzw. Monomere liegt dabei typischerweise in einem Bereich von mehr als 20, insbesondere mehr als 50, vorzugsweise mehr 100 Wiederholungseinheiten.

Erfindungsgemäß besteht die Funktion des Modifizierungsmittels vorzugsweise darin, als Dispersionsmedium, insbesondere aber auch als Bindemittel, zu wirken. Das heißt, im Rahmen der vorliegenden Erfindung ist es vorzugsweise vorgesehen, dass das Modifizierungsmittel in der Bitumenmischung die kontinuierliche Phase, insbesondere die Maltenphase, darstellt. Der Naturasphalt bildet dementsprechend bevorzugt die diskontinuierliche Phase, insbesondere die Asphaltenphase.

Im Hinblick auf die konkrete Zusammensetzung des Modifizierungsmittels kann diese generell in weiten Bereichen variieren, solange sichergestellt ist, dass das Modifizierungsmittel, insbesondere die enthaltene unpolare, hydrophobe und vorzugsweise viskose Flüssigkeit, den vorgenannten Anforderungen genügt.

Es hat sich im Rahmen der vorliegenden Erfindung jedoch als vorteilhaft erwiesen, wenn die unpolare, hydrophobe und vorzugsweise viskose Flüssigkeit aus der Gruppe von, insbesondere hochviskosen, Ölen, Harzen, Wachsen, und deren Mischungen, insbesondere aus der Gruppe von, insbesondere hochviskosen, Ölen, Harzen, und deren Mischungen, ausgewählt ist.

Ein Öl im Sinne der vorliegenden Erfindung bezeichnet dabei eine Flüssigkeit, die sich nicht mit Wasser mischen lässt.

Unter einem Harz wird im Rahmen der vorliegenden Erfindung ein zähflüssiges, hochviskoses Stoffgemisch verstanden, dass unter definierten Umständen, beispielsweise über eine gewisse Zeit oder unter speziellen Reaktionsbedingungen, gezielt aushärten kann.

Unter einem Wachs wird im Rahmen der vorliegenden Erfindung ein homogenes oder heterogenes Stoffgemisch aus organischen Verbindung verstanden, die unter den erfindungsgemäßen Verfahrensbedingungen flüssig sind, sich jedoch bei Temperaturen im Bereich der Raumtemperatur zunehmend verfestigen und nicht mit Wasser mischen lassen.

Das Öl kann nun im Allgemeinen aus einer Vielzahl von dem Fachmann an sich geläufigen Ölen ausgewählt sein. Bewährt hat es sich im Rahmen der vorliegenden Erfindung jedoch insbesondere, wenn das Öl ausgewählt ist aus der Gruppe von natürlichen, insbesondere pflanzlichen und/oder tierischen, Ölen, Mineralölen, synthetischen Ölen, deren Derivaten, Konzentraten, Oxidationsprodukten, Polymerisaten, Raffinaten, Redestillaten, Regeneraten und deren Mischungen, vorzugsweise pflanzlichen Ölen, Mineralölen, synthetischen Ölen, deren Derivaten, Konzentraten, Oxidationsprodukten, Polymerisaten, Raffinaten, Redestillaten, Regeneraten und deren Mischungen.

Unter einem Derivat wird im Rahmen der vorliegenden Erfindung dabei ein Stoff bzw. eine Verbindung verstanden, der bzw. die durch chemische Reaktion aus einer Stammverbindung erhalten wird sowie in diese zurücküberführt werden kann, wobei das Derivat eine Struktureinheit aufweist, die der zugrundeliegenden funktionellen Gruppe der Stammverbindung ähnlich ist und ein Strukturelement dieser funktionellen Gruppe im gleichen Oxidationszustand enthält.

Ein Konzentrat im Sinne der vorliegenden Erfindung bezeichnet einen Stoff bzw. insbesondere eine Flüssigkeit, der bzw. die nur einen geringen, insbesondere keinen, Anteil an zusätzlichen Füllstoffen oder Lösungsmitteln aufweist.

Unter einem Oxidationsprodukt wird im Rahmen der vorliegenden Erfindung das Reaktionsprodukt eines Stoffs bzw. Moleküls mit Sauerstoff verstanden.

Ein Polymerisat im Sinne der vorliegenden Erfindung meint das Reaktionsprodukt einer Polymerisation, welche sowohl thermisch als auch mittels geeigneter Katalysatoren initiiert worden sein kann.

Unter einem Raffinat wird im Rahmen der vorliegenden Erfindung das Produkt eines Raffinationsprozesses, d. h. eines technischen Verfahrens zur Reinigung, Veredlung, Trennung und/oder Konzentration von Rohstoffen, verstanden.

Ein Redestillat im Sinne der vorliegenden Erfindung bezeichnet eine durch destillative Trennung eines angefallenen bzw. gebrauchten Stoffgemisches zurückgewonnene Flüssigkeit.

In ähnlicher Weise wird unter einem Regenerat in Rahmen der vorliegenden Erfindung ein durch chemische Aufbereitung eines angefallenen bzw. gebrauchten Stoffgemisches zurückgewonnener Stoff verstanden.

In Bezug auf die pflanzlichen Öle kann es im Rahmen der vorliegenden Erfindung nun weiterhin vorgesehen sein, dass das pflanzliche Öl ausgewählt ist aus der Gruppe von Cashewnuss-Schalen-Öl, Distelöl, Holzöl, Keimöl, Kokosöl, Leinöl, Nussöl, Olivenöl, Palmöl, Rapsöl, Reisöl, Rizinusöl, Sojaöl, Sonnenblumenöl, Tallöl, deren Derivaten, Konzentraten, Oxidationsprodukten, Polymerisaten, Raffinaten, Redestillaten, Regeneraten und deren Mischungen.

Besonders bevorzugt wird es im Rahmen der vorliegenden Erfindung, wenn das pflanzliche Öl hierbei ausgewählt ist aus der Gruppe von Cashewnuss-Schalen-Öl, Nussöl, Palmöl, Sojaöl, Tallöl, deren Derivaten, Konzentraten, Oxidationsprodukten, Polymerisaten, Raffinaten, Redestillaten, Regeneraten und deren Mischungen.

Ganz besonders bevorzugt ist es im Rahmen der vorliegenden Erfindung, wenn das pflanzliche Öl ausgewählt ist aus Chashewnuss-Schalen-Öl bzw. dessen Derivaten, Konzentraten, Oxidationsprodukten, Polymerisaten, Raffinaten, Redestillaten, Regeneraten. Ein solches Öl ist beispielsweise unter dem Markennamen "RheoFalt HP-AM" bekannt und über das Ventraco Innovation Centre erhältlich. Ferner wird ein solches Öl in dem europäischen Patent 3 208 288 beschrieben.

Im Hinblick auf das tierische Öl hat es sich im Rahmen der vorliegenden Erfindung bewährt, wenn das tierische Öl ausgewählt ist aus der Gruppe von Fischöl, Tieröl, Seetieröl, Tran, Klauenöl, Knochenöl, Lardöl, Lebertran, deren Derivaten, Konzentraten, Oxidationsprodukten, Polymerisaten, Raffinaten, Redestillaten, Regeneraten und deren Mischungen.

Weiterhin hat es sich im Rahmen der vorliegenden Erfindung im Hinblick auf das Mineralöl bewährt, wenn das Mineralöl ausgewählt ist aus der Gruppe von Benzin, Diesel, Kerosin, Paraffinöl, Petroleum, Schweröl, deren Derivaten, Konzentraten, Oxidationsprodukten, Polymerisaten, Raffinaten, Redestillaten, Regeneraten und deren Mischungen.

Speziell bevorzugt wird es im Rahmen der vorliegenden Erfindung, wenn das Mineralöl ausgewählt ist aus der Gruppe von Diesel, Paraffinöl, deren Derivaten, Konzentraten, Oxidationsprodukten, Polymerisaten, Raffinaten, Redestillaten, Regeneraten und deren Mischungen.

Im Hinblick auf synthetische Öle ist es im Rahmen der vorliegenden Erfindung bevorzugt, wenn das synthetische Öl ausgewählt ist aus synthetischen Paraffinölen, insbesondere aus Fischer-Tropsch-Prozessen, deren Derivaten, Konzentraten, Oxidationsprodukten, Polymerisaten, Raffinaten, Redestillaten, Regeneraten und deren Mischungen.

Generell ist es dabei im Rahmen der vorliegenden Erfindung vorteilhaft, wenn das Öl einen Siedepunkt und/oder Zersetzungspunkt von mindestens 130 °C, insbesondere mindestens 180 °C, vorzugsweise mindestens 200 °C, aufweist.

Was nun das Harz anbelangt, so kann auch dieses im Allgemeinen aus dem Fachmann an sich bekannten Harzen ausgewählt sein. Speziell als vorteilhaft erwiesen hat es sich im Rahmen der vorliegenden Erfindung, wenn das Harz ausgewählt ist aus der Gruppe von Naturharzen, Gummiharzen, Kunstharzen, deren Derivaten, Extrakten, Oxidationsprodukten, Regeneraten, und deren Mischungen, insbesondere Naturharzen, deren Derivaten, Extrakten, Oxidationsprodukten, Regeneraten und deren Mischungen.

Unter einem Extrakt wird dabei im Rahmen der vorliegenden Erfindung ein Stoff verstanden, der im Zuge eines Extraktions- bzw. Trennverfahrens aus einem Stoffgemisch herausgelöst und somit weitestgehend isoliert wurde.

Im Hinblick auf das Wachs kann auch dieses aus dem Fachmann an sich bekannten geeigneten Wachsen ausgewählt sein. Als vorteilhaft erwiesen hat es sich im Rahmen der vorliegenden Erfindung, wenn das Wachs ausgewählt ist aus der Gruppe von natürlichen, insbesondere pflanzlichen und/oder tierischen, Wachsen, mineralischen Wachsen, teilsynthetischen Wachsen, deren Derivaten, Oxidationsprodukten, Raffinaten, Regeneraten und deren Mischungen. Besonders gute Ergebnisse werden erhalten, wenn das Wachs ausgewählt aus der Gruppe von natürlichen, insbesondere pflanzlichen Wachsen, mineralischen Wachsen, deren Derivaten, Oxidationsprodukten, Raffinaten, Regeneraten, und deren Mischungen.

Weiterhin kann auch das im Modifizierungsmittel enthaltene Polymer in Abhängigkeit von den jeweiligen Anforderungen in weiten Bereichen variieren und insbesondere ein dem Fachmann an sich bekanntes Polymer sein. Üblicherweise ist das Polymer ausgewählt aus der Gruppe von Polyestern, Polycarbonaten, Polyethylen, Polypropylen, Polyamiden, Polymerharzen, Polyacrylaten, Polymethacrylaten, Polyolefinen, Polyvinylen, Polyvinychloriden, Polystyrolen, Naturkautschuken, Synthesekautschuken, deren Regeneraten, Rezyklaten, Vulkanisaten, Homopolymeren, Heteropolymeren, Co-Polymeren und deren Mischungen

Weiterhin wird es im Rahmen der vorliegenden Erfindung besonders bevorzugt, wenn das Polymer ausgewählt ist aus der Gruppe von Naturkautschuken, Synthesekautschuken, deren Regeneraten, Rezyklaten, Vulkanisaten, Homopolymeren, Heteropolymeren, Co-Polymeren und deren Mischungen.

Unter einem Vulkanisat wird dabei im Rahmen der vorliegenden Erfindung das Produkt einer Vernetzungsreaktion verstanden, im Zuge derer aus einem thermoplastischen Polymer, insbesondere Kautschuk, ein elastomeres Polymer, insbesondere Gummi, erzeugt wird.

Unter einem Homopolymer wird im Rahmen der vorliegenden Erfindung ein Polymer verstanden, das nur aus einem Monomer bzw. Grundbaustein aufgebaut ist. Dementsprechend werden im Rahmen der vorliegenden Erfindung unter einem Heteropolymer solche Polymere verstanden, die aus mindestens zwei verschiedenen Monomeren bzw. Grundbausteinen aufgebaut sind. Dies weiterführend wird im Rahmen der vorliegenden Erfindung unter einem Co-Polymer ein solches Heteropolymer verstanden, bei dem die mindestens zwei Monomere bzw. Grundbausteine in einer in gewisser Weise geordneten, sich wiederholenden Reihenfolge angeordnet sind.

Im Hinblick auf den Naturkautschuk hat es sich im Rahmen der vorliegenden Erfindung als vorteilhaft erwiesen, wenn der Naturkautschuk zumindest im Wesentlichen Polyisopren-Kautschuk und/oder dessen Regenerate, Rezyklate, Vulkanisate, Homopolymere, Heteropolymere, Co-Polymere und deren Mischungen enthält oder hieraus besteht.

Gleichermaßen ist es im Rahmen der vorliegenden Erfindung bevorzugt, wenn der Synthesekautschuk ausgewählt ist aus der Gruppe von Styrol-Butadien-Kautschuk, Butadien-Kautschuk, Acrylnitril-Butadien-Kautschuk, hydriertem Nitrilkautschuk, Butylkautschuk, Ethylen-Propylen-Dien-Kautschuk, Chloropren-Kautschuk, Siliconkautschuk, Fluorkautschuk, Fluor-Silikon-Kautschuk, Chlorsulfonyl-PolyethylenKautschuk, Polyurethankautschuk, Polyester-Urethan-Kautschuk, deren Regeneraten, Rezyklaten, Vulkanisaten, Homopolymeren, Heteropolymeren, Co-Polymeren und deren Mischungen.

Was nun die Zusammensetzung der erfindungsgemäßen Bitumenmischung anbelangt, so kann diese in weiten Bereichen variieren. Im Rahmen der vorliegenden Erfindung hat es sich jedoch als vorteilhaft erwiesen, wenn die Bitumenmischung das Modifizierungsmittel in Mengen von mindestens 20 Gew.%, insbesondere mindestens 30 Gew.%, vorzugsweise mindestens 40 Gew.%, bezogen auf die Bitumenmischung, enthält.

Gleichermaßen werden im Rahmen der vorliegenden Erfindung besonders gute Ergebnisse erhalten, wenn die Bitumenmischung das Modifizierungsmittel in Mengen im Bereich von 20 bis 90 Gew.%, insbesondere 30 bis 80 Gew.%, vorzugsweise 40 bis 70 Gew.%, bezogen auf die Bitumenmischung, enthält.

Darüber hinaus hat es sich im Rahmen der vorliegenden Erfindung als vorteilhaft erwiesen, wenn das Modifizierungsmittel das Polymer in Mengen von mindestens 2 Gew.%, insbesondere mindestens 5 Gew.%, vorzugsweise mindestens 10 Gew.%, bezogen auf das Modifizierungsmittel, enthält.

Besonders gute Ergebnisse werden im Rahmen der vorliegenden Erfindung erhalten, wenn das Modifizierungsmittel das Polymer in Mengen im Bereich von 2 bis 50 Gew.%, insbesondere 5 bis 40 Gew.%, vorzugsweise 10 bis 35 Gew.%, bezogen auf das Modifizierungsmittel, enthält.

Auch bietet es sich im Rahmen der vorliegenden Erfindung vorzugsweise an, dass die Bitumenmischung den Naturasphalt in Mengen von höchstens 80 Gew.-%, insbesondere höchstens 70 Gew.-%, vorzugsweise höchstens 60 Gew.-%, bezogen auf die Bitumenmischung, enthält.

Wiederum besonders gute Ergebnisse werden im Rahmen der vorliegenden Erfindung erhalten, wenn die Bitumenmischung den Naturasphalt in Mengen im Bereich von 20 bis 80 Gew.-%, insbesondere 30 bis 70 Gew.-%, vorzugsweise 40 bis 60 Gew.-%, bezogen auf die Bitumenmischung, enthält.

Im Rahmen einer weiter bevorzugten Ausführungsform der vorliegenden Erfindung hat es sich darüber hinaus als vorteilhaft erwiesen, wenn die Bitumenmischung mindestens ein Additiv enthält.

Das Additiv kann dabei im Allgemeinen ausgewählt sein aus dem Fachmann an und für sich geläufigen Additiven. Speziell bevorzugt ist es im Rahmen dieser besonderen Ausführungsform der vorliegenden Erfindung jedoch, wenn das Additiv aus der Gruppe von Tensiden, Haftvermittlern, Flussmitteln, Entschäumern, Verdickungsmitteln, Korrosionsinhibitoren, Detergentien, Tribologiestellmitteln, Antioxidantien, UV-Stabilisatoren, Reaktionsbeschleunigern, Vernetzern, Sikkativen, pH-Modifikatoren und deren Mischungen ausgewählt ist.

Wenn der Bitumenmischung ein Additiv zugesetzt wird, so hat es sich bewährt, wenn die Bitumenmischung das Additiv in Mengen von höchstens 12 Gew.-%, insbesondere höchstens 8 Gew.-%, vorzugsweise höchstens 6 Gew.-%, bezogen auf die Bitumenmischung, enthält.

Besonders gute Ergebnisse werden im Rahmen dieser Ausführungsform der vorliegenden Erfindung erhalten, wenn die Bitumenmischung das Additiv in Mengen von 0,1 bis 12 Gew.-%, insbesondere 0,5 bis 8 Gew.-%, vorzugsweise 1 bis 6 Gew.-%, bezogen auf die Bitumenmischung, enthält.

Im Hinblick auf die Viskosität der erfindungsgemäßen Bitumenmischung ist es vorzugsweise vorgesehen, dass die Bitumenmischung eine kinematische Viskosität im Bereich von mehr als 100 mm²/s, insbesondere mehr als 250 mm²/s, gemessen bei 135 °C, aufweist. Die kinematische Viskosität wird hierbei gemäß DIN EN 12595:2015-01 bestimmt.

Erfindungsgemäß kann es außerdem bevorzugt sein, wenn die Bitumenmischung ein temperaturabhängiges Viskositätsverhalten, insbesondere eine bei zunehmender Temperatur, vorzugsweise linear, abnehmende Viskosität, aufweist.

Die erfindungsgemäße Bitumenmischung zeichnet sich darüber hinaus durch eine Vielzahl besonderer Eigenschaften aus, welche sich insbesondere auch in den Parametern betreffend die Härte, den Erweichungspunkt sowie den Brechpunkt der erfindungsgemäßen Bitumenmischung niederschlagen können.

So ist es im Rahmen der vorliegenden Erfindung vorzugsweise vorgesehen, dass die Bitumenmischung eine Penetration im Bereich von 5 bis 60 [0,1 mm], insbesondere 10 bis 50 [0,1 mm], vorzugsweise 15 bis 45 [0,1 mm], aufweist. Die Bestimmung der Penetration der erfindungsgemäßen Bitumenmischung erfolgt dabei gemäß DIN EN 1426 mittels Nadelpenetration. Die Nadelpenetration wird bei einer festgelegten Temperatur von 25 °C unter Verwendung einer genormten Nadel mit einem Gewicht von 100 g über einen Zeitraum von 5 Sekunden gemessen, wobei die Nadel mit einem Gewicht belastet und die Eindringtiefe der Nadel in Zehntelmillimetern bestimmt wird.

Weiterhin kann es vorgesehen sein, dass die erfindungsgemäße Bitumenmischung einen Erweichungspunkt Ring und Kugel im Bereich von 30 bis 90 °C, insbesondere 40 bis 80 °C, vorzugsweise 50 bis 75 °C, hat. Die Bestimmung des Erweichungspunkts Ring und Kugel erfolgt dabei in Übereinstimmung mit DIN EN 1427. Zur Ermittlung des Erweichungspunktes wird eine Stahlkugel auf eine in einem Ring angebrachte Bitumenschicht gelegt, woraufhin das Material im Versuchsverlauf gleichmäßig erwärmt wird. Wenn das Material sich um 25,4 ± 0,2 mm nach unten verformt hat, wird die entsprechend gemessene Temperatur als Erweichungspunkt festgehalten. Der Versuch wird als Zweifachbestimmung durchgeführt.

Außerdem ist es für erfindungsgemäße Bitumenmischungen vorzugsweise vorgesehen, dass diese einen Brechpunkt nach Fraaß im Bereich von 0 bis -50 °C, insbesondere -5 bis -30 °C, vorzugsweise -10 bis -25 °C, aufweisen. Die Bestimmung des Brechpunktes nach Fraaß erfolgt dabei gemäß EN 12593. Hierzu ist es vorgesehen, dass ein Film aus dem zu untersuchenden Bitumen auf ein Prüfblech aufgeschmolzen oder aufgepresst wird und anschließend unter Abkühlung und Durchbiegung bis zum Brechen des Prüfbleches belastet wird.

Nicht zuletzt kann es im Rahmen der vorliegenden Erfindung vorgesehen sein, dass die erfindungsgemäße Bitumenmischung eine Plastizitätsspanne im Bereich von 60 bis 100 °C, insbesondere 70 bis 90 °C, vorzugsweise 75 bis 85 °C, aufweist. Die Plastizitätsspanne definiert hierbei die Temperaturspanne, innerhalb der eine Bitumenmischung verarbeitet werden kann und ergibt sich aus dem Erweichungspunkt und der Penetration eines Bitumens.

Weiterer Gegenstand der vorliegenden Erfindung - gemäß einem **zweiten** Aspekt der vorliegenden Erfindung - ist die Verwendung der zuvor beschriebenen Bitumenmischung zur Herstellung eines Asphalts.

Für weitergehende Einzelheiten zu der erfindungsgemäßen Verwendung kann auf die obigen Ausführungen zu der erfindungsgemäßen Bitumenmischung verwiesen werden, welche in Bezug auf die erfindungsgemäße Verwendung entsprechend gelten.

Wiederum weiterer Gegenstand der vorliegenden Erfindung - gemäß einem **dritten** Aspekt der vorliegenden Erfindung - ist ein *Kit-of-Parts* zur Herstellung einer, insbesondere zuvor beschriebenen, Bitumenmischung, enthaltend
A) einen Naturasphalt und
B) ein Modifizierungsmittel,
wobei das Modifizierungsmittel mindestens ein Polymer und mindestens eine unpolare, hydrophobe und vorzugsweise viskose Flüssigkeit aufweist oder hieraus besteht.

Im Rahmen der vorliegenden Erfindung hat es sich bewährt, wenn Additive, insbesondere die im Zusammenhang mit der erfindungsgemäßen Bitumenmischung ausgewählten Additive, der Komponente B, d. h. dem Modifizierungsmittel, zugesetzt sind.

Für weitergehende Einzelheiten zu dem erfindungsgemäßen *Kit-of-Parts* kann auf die obigen Ausführungen zu den übrigen Erfindungsaspekten verwiesen werden, welche in Bezug auf das erfindungsgemäße *Kit-of-Parts* entsprechend gelten.

Wiederum weiterer Gegenstand der vorliegenden Erfindung - gemäß einem **vierten** Aspekt der vorliegenden Erfindung - ist ein Modifizierungsmittel, wobei das Modifizierungsmittel mindestens ein Polymer und mindestens eine unpolare, hydrophobe und vorzugsweise viskose Flüssigkeit aufweist oder hieraus besteht

Was nun die Menge anbelangt, in welcher das Modifizierungsmittel das Polymer enthält, so kann diese jeweils in Abhängigkeit von den gegebenen individuellen Anwendungserfordernissen in weiten Bereichen variieren. Üblicherweise enthält das Modifizierungsmittel das Polymer jedoch in Mengen von mindestens 2 Gew.-%, insbesondere mindestens 5 Gew.-%, vorzugsweise mindestens 10 Gew.-%, bezogen auf das Modifizierungsmittel.

Gleichermaßen kann es vorgesehen sein, dass das Modifizierungsmittel das Polymer in Mengen im Bereich von 2 bis 50 Gew.-%, insbesondere 5 bis 40 Gew.-%, vorzugsweise 10 bis 35 Gew.-%, bezogen auf das Modifizierungsmittel, enthält.

Für weitergehende Einzelheiten zu dem erfindungsgemäßen Modifizierungsmittel kann auf die obigen Ausführungen zu den übrigen Erfindungsaspekten verwiesen werden, welche in Bezug auf das erfindungsgemäße Modifizierungsmittel entsprechend gelten.

Wiederum weiterer Gegenstand der vorliegenden Erfindung - gemäß einem **fünften** Aspekt der vorliegenden Erfindung - ist die Verwendung des zuvor beschriebenen Modifizierungsmittels zur Herstellung einer Bitumenmischung, insbesondere wie zuvor beschrieben.

Für weitergehende Einzelheiten zu der erfindungsgemäßen Verwendung des Modifizierungsmittels kann auf die obigen Ausführungen zu den übrigen Erfindungsaspekten verwiesen werden, welche in Bezug auf die erfindungsgemäße Verwendung entsprechend gelten.

Weiterer Gegenstand der vorliegenden Erfindung - gemäß einem **sechsten** Aspekt der vorliegenden Erfindung - ist ein Verfahren zur Herstellung eines Modifizierungsmittels, aufweisend oder bestehend aus mindestens einem Polymer und mindestens einer unpolaren, hydrophoben und vorzugsweise viskosen Flüssigkeit, wobei die unpolare, hydrophobe und vorzugsweise viskose Flüssigkeit mit dem Polymer versetzt wird.

Im Allgemeinen ist es im Rahmen der vorliegenden Erfindung vorgesehen, dass das Polymer in der unpolaren, hydrophoben und vorzugsweise viskosen Flüssigkeit gelöst oder dispergiert wird, vorzugsweise gelöst wird. Dies bedeutet, dass im Rahmen der vorliegenden Erfindung die unpolare, hydrophobe und vorzugsweise viskose Flüssigkeit derart mit dem Polymer versetzt wird, dass eine homogene Dispersion oder Lösung entsteht.

Weiterhin hat es sich im Rahmen der vorliegenden Erfindung als vorteilhaft erwiesen, wenn die Flüssigkeit mit dem Polymer in einem Verhältnis von 1:2 bis 10:1, insbesondere 1:1 bis 5:1, vorzugsweise 2:1 bis 4:1, bezogen auf die jeweils eingesetzten Massen von Flüssigkeit und Polymer, versetzt wird.

Im Rahmen des erfindungsgemäßen Verfahrens ist es speziell bevorzugt, wenn die Flüssigkeit durch Extraktion des Polymers mit dem Polymer versetzt, vorzugsweise modifiziert, insbesondere mit dem Polymer angereichert, wird.

Hierfür ist es erfindungsgemäß insbesondere vorgesehen, dass das Versetzen bzw. das Modifizieren oder Anreichern der Flüssigkeit mit dem Polymer durch eine Migration löslicher Polymerbestandteile aus dem Polymer heraus in die Flüssigkeit hinein erfolgt. In diesem Sinne kann der Vorgang auch als eine Auslaugung des Polymers bzw. Extraktion löslicher Polymerbestandteile verstanden werden.

Weiterhin hat es sich erfindungsgemäß als zweckdienlich erwiesen, wenn das Polymer in fester, insbesondere partikulärer, vorzugsweise granularer, bevorzugt pulvriger, Form eingesetzt wird. So ist in vorteilhafter Weise sichergestellt, dass das Polymer in einer Ausgangsform eingesetzt wird, auf Basis derer eine möglichst große Oberfläche, d. h. Interaktionsfläche mit der Flüssigkeit, erreicht wird, so dass der Anreicherungsschritt effizient, insbesondere zeiteffizient, erfolgen kann.

Außerdem hat es sich als vorteilhaft erwiesen, wenn das Polymer zumindest im Wesentlichen partiell, insbesondere vollständig, in der Flüssigkeit aufgequollen wird. Hierdurch werden eine zusätzliche weitreichende Interaktion bzw. idealerweise Durchdringung des, insbesondere partikulär, eingesetzten Polymers durch die Flüssigkeit erreicht, so dass die Mobilisierung löslicher Polymerbestandteile und damit die Modifizierung bzw. insbesondere Anreicherung des Polymers in der Flüssigkeit besonders effizient gestaltet werden.

Des Weiteren kann es von Vorteil sein, wenn die Flüssigkeit durch Reaktion, insbesondere Vernetzung, Kondensation, Additionsreaktion des Polymers modifiziert, insbesondere mit dem Polymer angereichert, wird.

Dazu ist es im Rahmen des erfindungsgemäßen Verfahrens vorzugsweise vorgesehen, dass das Versetzen der Flüssigkeit mit dem Polymer, insbesondere das Extrahieren des Polymers, über mindestens 30 min, insbesondere mindestens 45 min, vorzugsweise mindestens 55 min, durchgeführt wird.

Gleichermaßen kann es vorgesehen sein, dass das Versetzen der Flüssigkeit mit dem Polymer, insbesondere das Extrahieren des Polymers, über höchsten 600 min, insbesondere höchstens 500 min, vorzugsweise höchstens 400 min, durchgeführt wird.

Zusätzlich wird es im Rahmen des erfindungsgemäßen Verfahrens bevorzugt, wenn das Versetzen der Flüssigkeit mit dem Polymer, insbesondere das Extrahieren des Polymers, bei Temperaturen von mindestens 120 °C, insbesondere mindestens 140 °C, vorzugsweise mindestens 160 °C, bevorzugt mindestens 180 °C, erfolgt.

Im Rahmen der vorliegenden Erfindung werden besondere gute Ergebnisse erhalten, wenn das Versetzen der Flüssigkeit mit dem Polymer, insbesondere das Extrahieren des Polymers, bei Temperaturen im Bereich von mindestens 120 bis 220 °C, insbesondere mindestens 140 bis 210 °C, vorzugsweise 160 bis 200 °C, bevorzugt 180 bis 200 °C, erfolgt

Unter diesen Verfahrensbedingungen wird insbesondere ein besonders zuverlässiges Versetzen der Flüssigkeit mit dem Polymer bzw. eine besonders verlässliche Anreicherung des Polymers in der Flüssigkeit, erreicht. Insgesamt erlaubt das erfindungsgemäße Verfahren eine gezielte Beeinflussung der Eigenschaften des Modifizierungsmittels, welche insbesondere durch die eingesetzten Mengen und Art des Polymers beeinflusst bzw. variiert werden können.

Nicht zuletzt ist es zum Abschluss des erfindungsgemäßen Herstellungsverfahrens vorzugsweise vorgesehen, dass in der Flüssigkeit unlösliches Polymer, insbesondere unlösliche Polymerbestandteile, durch Dekantieren, Filtrieren, Destillieren, insbesondere unter vermindertem Druck, von der Flüssigkeit abgetrennt wird bzw. werden. Durch diesen Vorgang kann sichergestellt werden, dass keine störenden partikulären Polymerreste in der Flüssigkeit bzw. dem hergestellten Modifizierungsmittel verbleiben bzw. in die Bitumenmischung eingebracht werden. Durch eventuelle unlösliche Polymerreste können die Eigenschaften der Bitumenmischung gestört werden, insbesondere wenn beispielsweise Aggregate bzw. Verklumpungen oder Ähnliches durch unlösliches Polymer gebildet werden. Dies wird durch die erfindungsgemäße Verfahrensgestaltung in effizienter Weise verhindert.

Für weitergehende Einzelheiten zu dem erfindungsgemäßen Verfahren zur Herstellung des Modifizierungsmittels kann auf die obigen Ausführungen zu den übrigen Erfindungsaspekten verwiesen werden, welche in Bezug auf das erfindungsgemäße Verfahren entsprechend gelten.

Wiederum weiterer Gegenstand der vorliegenden Erfindung - gemäß einem **siebten** Aspekt der vorliegenden Erfindung - ist ein Verfahren zur Herstellung einer Bitumenmischung, enthaltend einen Naturasphalt und ein Modifizierungsmittel, wobei der Naturasphalt mit dem Modifizierungsmittel vermischt wird.

Für das erfindungsgemäße Verfahren hat es sich hierbei als vorteilhaft erwiesen, wenn das Vermischen bei höchstens 230 °C, insbesondere höchstens 210 °C, vorzugsweise höchstens 200 °C, bevorzugt höchstens 190 °C, insbesondere durch Vermengen, Verrühren, Vermahlen, Umwälzen, durchgeführt wird.

Gleichermaßen wird es bevorzugt, wenn das Vermischen bei Temperaturen im Bereich von 120 bis 230 °C, insbesondere 130 bis 210 °C, vorzugsweise 140 bis 200 °C, bevorzugt 140 bis 190 °C, insbesondere durch Vermengen, Verrühren, Vermahlen, Umwälzen, durchgeführt wird.

Gemäß einer besonderen Ausführungsform der Erfindung wird das Vermischen bei Temperaturen im Bereich von 180 bis 250 °C, insbesondere 190 bis 240 °C, vorzugsweise 200 bis 230 °C, insbesondere durch Vermengen, Verrühren, Vermahlen, Umwälzen, durchgeführt. Bei dieser Ausführungsform liegt die Bitumenmischung in niedrigviskoser Form vor und kann besonders rasch gemischt und in dünnen Schichten verarbeitet werden.

Für den Fall, dass der Bitumenmischung außerdem ein Additiv zugesetzt werden soll, kann es im Rahmen des erfindungsgemäßen Verfahrens weiterhin vorgesehen sein, dass beim Vermischen mindestens ein Additiv zugesetzt, insbesondere zudosiert, wird. Gleichermaßen kann es jedoch auch vorgesehen sein, dass das Additiv dem Modifizierungsmittel bereits in einem separaten vorgelagerten Verfahrensschritt zugegeben wird.

Nicht zuletzt hat es sich bewährt, wenn das Vermischen über höchsten 30 min, insbesondere höchstens 15 min, vorzugsweise höchstens 10 min, durchgeführt wird.

Das erfindungsgemäße Verfahren zur Herstellung der Bitumenmischung basiert somit auf einem unkompliziert durchführbaren Mischvorgang. Hierbei ist es insbesondere auch möglich, dass das Verfahren bedarfsgenau, beispielsweise direkt am Einsatzort bzw. unmittelbar vor dem Einsatzzeitpunkt der Bitumenmischung, durchgeführt wird. Somit gestaltet sich das erfindungsgemäße Verfahren besonders anwenderfreundlich und flexibel in der Durchführung.

Im Rahmen einer ganz besonders bevorzugten Ausführungsform der vorliegenden Erfindung kann es vorgesehen sein, dass das Verfahren zur Herstellung des Modifizierungsmittels und das Verfahren zur Herstellung der Bitumenmischung miteinander gekoppelt werden. Im Rahmen dieser speziellen Ausführungsform wäre für das Verfahren zur Herstellung einer Bitumenmischung, enthaltend einen Naturasphalt und ein Modifizierungsmittel, vorgesehen, dass in einem ersten Verfahrensschritt
i) das Modifizierungsmittel durch Modifizieren, insbesondere Anreichern der unpolaren, hydrophoben und vorzugsweise viskosen Flüssigkeit mit dem Polymer bereitgestellt wird, und
   in einem nachfolgenden zweiten Verfahrensschritt
ii) der Naturasphalt mit dem Modifizierungsmittel vermischt wird.

Für die weitergehenden Einzelheiten zu dem erfindungsgemäßen Verfahren zur Herstellung der Bitumenmischung kann auf die obigen Ausführungen zu den übrigen Erfindungsaspekten verwiesen werden, welche in Bezug auf das erfindungsgemäße Verfahren entsprechend gelten.

Weiterer Gegenstand der vorliegenden Erfindung - gemäß einem **achten** Aspekt der vorliegenden Erfindung - ist ein Asphalt, insbesondere zur Verwendung im Straßenbau, enthaltend
I) eine zuvor beschriebene Bitumenmischung und
II) eine Gesteinskörnung.

Der erfindungsgemäße Asphalt zeichnet sich in vorteilhafter Weise durch eine hervorragende Kohäsion der Zusammensetzung aus, so dass diese zuverlässig verarbeitet werden kann. Die hervorragenden Kohäsionswerte ergeben sich dabei insbesondere aus der idealen Abstimmbarkeit einerseits der Komponenten der Bitumenmischung aufeinander sowie andererseits der Bitumenmischung und der Gesteinskörnung aufeinander, so dass zunächst optimale Hafteigenschaften der Bitumenmischung sowie generell eine optimale Mischbarkeit der Komponenten erreicht wird.

Außerdem erzielt der Asphalt, u. a. auch auf Basis der zugesetzten erfindungsgemäßen Bitumenmischung, eine gute Griffigkeit, so dass der Asphalt beispielsweise gut für die Verwendung als robuster bzw. belastbarer Straßenbelag geeignet ist.

Nicht zuletzt ist es ein besonderer Vorteil des erfindungsgemäßen Asphalts, dass die einzelnen Komponenten kalt zum Anwendungsort transportiert werden können und vor Ort einfach den jeweiligen Anforderungen entsprechend gemischt werden können, so dass hiermit insbesondere zunächst eine signifikante Erleichterung der Herstellung, aber auch des Transportes und der Lagerung des Asphalts erreicht werden können. Dies resultiert insbesondere in einem kostenreduzierenden sowie ressourcenschonenden Effekt und trägt weiterhin auch dem Aspekt der Arbeitssicherheit in vorteilhafter Weise Rechnung.

Im Hinblick auf die Gesteinskörnung kann diese im Allgemeinen in weiten Bereichen bezüglich ihrer Art und Beschaffenheit in einer für den Fachmann an sich bekannten Weise variieren. Im Rahmen der vorliegenden Erfindung werden jedoch besonders gute Ergebnisse erhalten, wenn die Gesteinskörnung natürliche, künstliche und/oder rezyklierte mineralische Bestandteile, insbesondere natürliche und/oder rezyklierte mineralische Bestandteile, enthält oder hieraus besteht, insbesondere hieraus besteht.

In diesem Zusammenhang hat es sich weiterhin bewährt, wenn die Gesteinskörnung mineralische Bestandteile ausgewählt aus der Gruppe von Kies, Sand, Schotter, Split, Brechsand, Felsengestein, Schlacke, rezykliertem Asphalt, Asphaltgranulat und deren Mischungen enthält oder hieraus besteht, insbesondere hieraus besteht.

Im Rahmen der vorliegenden Erfindung ist es also insbesondere auch möglich, ausgebauten Asphalt in vorteilhafter Weise wiederzuverwerten, so dass ressourcen- und umweltschonend bereits vorhandene Rohstoffquellen effektiv genutzt werden können. In diesem Sinne kann die erfindungsgemäße Bitumenmischung in gewisser Weise auch zur Verjüngung von älterem bzw. abgenutztem und ausgebautem Asphalt verwendet werden.

Im Hinblick auf die Beschaffenheit der Gesteinskörnung kann es weiterhin vorgesehen sein, dass die Gesteinskörnung eine Korngröße von höchstens 32 mm, insbesondere höchstens 16 mm, vorzugsweise höchstens 5 mm, aufweist.

Insbesondere als vorteilhaft erwiesen hat es sich im Rahmen der vorliegenden Erfindung, wenn die Gesteinskörnung eine Korngröße im Bereich von 0,063 bis 32 mm, insbesondere 0,125 bis 16 mm, vorzugsweise 0,25 bis 5 mm, aufweist.

Auch in Bezug auf die Zusammensetzung des Asphalts kann diese in einer dem Fachmann an sich bekannten Weise in breiten Bereichen variieren. Erfindungsgemäß hat es sich jedoch insbesondere bewährt, wenn der Mengenanteil der Gesteinskörnung höchstens 97 Gew.-%, insbesondere höchstens 95 Gew.-%, vorzugsweise höchstens 92 Gew.-%, bezogen auf den Asphalt, liegt.

Gleichermaßen ist es im Rahmen der vorliegenden Erfindung vorzugsweise vorgesehen, dass der Mengenanteil des Bitumens mindestens 3 Gew.-%, insbesondere mindestens 5 Gew.-%, vorzugsweise mindestens 8 Gew.-%, bezogen auf den Asphalt, beträgt.

Weiterhin kann es im Rahmen einer besonders bevorzugten Ausführungsform der vorliegenden Erfindung vorgesehen sein, dass der erfindungsgemäße Asphalt sich dadurch auszeichnet, dass der Asphalt mindestens einen Füllstoff enthält.

Für weitergehende Einzelheiten zu dem erfindungsgemäßen Asphalt kann auf die obigen Ausführungen zu den übrigen Erfindungsaspekten verwiesen werden, welche in Bezug auf den erfindungsgemäßen Asphalt entsprechend gelten.

Weiterer Gegenstand der vorliegenden Erfindung - gemäß einem **neunten** Aspekt der vorliegenden Erfindung - ist die Verwendung des erfindungsgemäßen Asphalts im Baubereich, im Straßenbau, insbesondere als Asphaltbelag und/oder Asphaltbelagzusatz und/oder als Reparaturasphalt.

Für die weitergehende Einzelheiten zu der erfindungsgemäßen Verwendung des Asphalts kann auf die obigen Ausführungen zu den übrigen Erfindungsaspekten verwiesen werden, welche in Bezug auf die erfindungsgemäße Verwendung entsprechend gelten.

Schließlich ein weiterer Gegenstand der vorliegenden Erfindung - gemäß einem **zehnten** Aspekt der vorliegenden Erfindung - ist ein Verfahren zur Herstellung eines erfindungsgemäßen Asphalts, enthaltend eine Bitumenmischung nach der vorliegenden Erfindung und eine Gesteinskörnung, wobei die Gesteinskörnung mit der Bitumenmischung bei Temperaturen von weniger als 230 °C vermengt wird.

Erfindungsgemäß hat es sich bewährt, wenn das Verfahren als kontinuierlicher oder diskontinuierlicher, chargenweiser Prozess, insbesondere diskontinuierlicher, chargenweiser Prozess, durchgeführt wird.

Hierbei wird unter einem diskontinuierlichen, chargenweisen Prozess ein derartiger Prozess verstanden, bei dem nur eine spezielle, vorab festgelegte Menge des Asphalts hergestellt wird. Im Rahmen eines kontinuierlichen Prozesses würde demgegenüber beständig im Dauerbetrieb ein bestimmter Asphalt produziert.

Das erfindungsgemäße Verfahren kann dabei leicht in einer dem Fachmann an sich geläufigen Mischvorrichtung durchgeführt werden, wobei insbesondere auf Einrichtungen, die zum heißen Vorhalten von Bestandteilen herkömmlicher Asphaltmischungen dienen, verzichtet werden kann. Damit geht das erfindungsgemäße Verfahren mit einer maßgeblichen Erleichterung des Herstellungsprozesses für einen Asphalt einher.

Es kann weiterhin vorzugsweise vorgesehen sein, dass bei Temperaturen von weniger als 200 °C, insbesondere weniger als 180 °C vermengt wird. Im Rahmen einer ganz besonders bevorzugten Ausführungsform der vorliegenden Erfindung erfolgt das Vermengen bei Temperaturen im Bereich von 140 bis 190 °C.

Für weitergehende Einzelheiten zu dem erfindungsgemäßen Verfahren zur Herstellung der kalt verarbeitbaren bituminösen Zusammensetzung kann auf die obigen Ausführungen zu den übrigen Erfindungsaspekten verwiesen werden, welche in Bezug auf das erfindungsgemäße Verfahren entsprechend gelten.

Der Gegenstand der vorliegenden Erfindung wird nachfolgend in nicht beschränkender Weise anhand der Ausführungsbeispiele verdeutlicht.

### Ausführungsbeispiele:

1. Herstellung der Polymer-angereicherten Zusammensetzung
Zur Herstellung einer erfindungsgemäßen Polymer-angereicherten Zusammensetzung wurden in zwei parallelen Ansätzen ein Gummigranulat aus rezyklierten Autoreifen und RheoFalt HP-AM als Ölkomponente im Mengenverhältnis 3 : 1 miteinander vermischt. Zu dieser Mischung wird unter ständigem Rühren mit einem Flügelrührer bei 140 °C und 160 °C nach 1 Stunde, 3 Stunden und 6 Stunden jeweils das Gummigranulat in die Ölkomponente eingerührt, so dass sich die Polymere aus dem Gummigranulat in der Ölkomponente anreichern können.
Nach Ablauf der jeweiligen Reaktionszeiten werden unlösliche Restbestandteile des Gummigranulats wieder aus der Zusammensetzung entfernt. Zur Überprüfung der Rückwaage nach Einwaage wird abtropfen gelassen und anschließend die Massenbilanz bestimmt.
Als Vergleichsprobe wird eine Nullvariante, d. h. ein RheoFalt HP-AM ohne Gummimodifikation, vorbereitet.
2. Herstellung der Bitumenmischung
Die erfindungsgemäß hergestellte Polymer-angereicherte Zusammensetzung wird mit dem Naturasphalt, insbesondere Gilsonite, je nach Modifizierungstemperatur und- zeit im Mengenverhältnis 48 : 52 bis 55 : 45 Gew.-% vermischt und anschließend die resultierenden Bindemittelkennwerte ermittelt.
3. Evaluation der Bitumenmischung

**Mischung 48% Rheophalt - 52% Gilsonite**

| | **1h-140°C** | **3h-140°C** | **6h-140°C** | **1h-160°C** | **3h-160°C** | **6h-160°C** |
|---|---|---|---|---|---|---|
| **RuK** | 60,2 | 61,4 | 63,6 | 64,4 | 68,2 | 70,4 |
| **Pen** | 39 | 41 | 36 | 38 | 28 | 25 |
| **BP** | -20 | -16 | -15 | -15 | -16 | -14 |
| **Elast.Rckst.** | 30 | 31 | 36 | 38 | 37 | 41 |
| | | Fadenriss bei 19,7 cm | Fadenriss bei 16,5 cm | Fadenriss F bei 14,7 cm | adenriss bei 15,5 cm | Fadenriss bei 11,7 cm |

**Mischung 55% Reophalt - 45% Gilsonite**

| | **16h-140°C** |
|---|---|
| **RuK** | 54,8 |
| **Pen** | 66 |
| **BP** | -25 |
| **elast. Rckst.** | 38 |

## Patentansprüche

1. Bitumenmischung, enthaltend
a) einen Naturasphalt und
b) ein Modifizierungsmittel,
wobei das Modifizierungsmittel mindestens ein Polymer und mindestens eine unpolare, hydrophobe und vorzugsweise viskose Flüssigkeit aufweist oder hieraus besteht.

2. Bitumenmischung nach Anspruch 1, **dadurch gekennzeichnet, dass** der Naturasphalt ausgewählt ist aus der Gruppe von Albertit, Asphaltit, Gilsonit, Grahamit, Impsonit, Leyteit, Libollit, McKittrit, Nigrit, Rafealit, Tabbyit, Uintahit, Wurtzilit, deren Raffinaten und Mischungen, insbesondere aus Asphaltit, Gilsonit, Grahamit, Uintahit, deren Raffinaten und deren Mischungen, vorzugsweise Asphaltit, Gilsonit, Uintahit, deren Raffinaten und deren Mischungen.

3. Bitumenmischung nach einem der Ansprüche 1 oder 2, **dadurch gekennzeichnet,**
**dass** die unpolare, hydrophobe und vorzugsweise viskose Flüssigkeit aus der Gruppe von, insbesondere hochviskosen, Ölen, Harzen, Wachsen, und deren Mischungen, insbesondere aus der Gruppe von, insbesondere hochviskosen, Ölen, Harzen, und deren Mischungen, ausgewählt ist und/oder
**dass** das Polymer ausgewählt ist aus der Gruppe von Polyestern, Polycarbonaten, Polyethylen, Polypropylen, Polyamiden, Polymerharzen, Polyacrylaten, Polymethacrylaten, Polyolefinen, Polyvinylen, Polyvinychloriden, Polystyrolen, Naturkautschuken, Synthesekautschuken, deren Regeneraten, Rezyklaten, Vulkanisaten, Homopolymeren, Heteropolymeren, Co-Polymeren und deren Mischungen, insbesondere Naturkautschuken, Synthesekautschuken, deren Regeneraten, Rezyklaten, Vulkanisaten, Homopolymeren, Heteropolymeren, Co-Polymeren und deren Mischungen.

4. Bitumenmischung nach einem der vorangehenden Ansprüche, **dadurch gekennzeichnet,**
**dass** die Bitumenmischung das Modifizierungsmittel in Mengen im Bereich von 20 bis 90 Gew.%, insbesondere 30 bis 80 Gew.%, vorzugsweise 40 bis 70 Gew.%, bezogen auf die Bitumenmischung, enthält und/oder
**dass** die Bitumenmischung den Naturasphalt in Mengen im Bereich von 20 bis 80 Gew.%, insbesondere 30 bis 70 Gew.%, vorzugsweise 40 bis 60 Gew.%, bezogen auf die Bitumenmischung, enthält.

5. Verwendung einer Bitumenmischung nach einem der vorangehenden Ansprüche zur Herstellung eines Asphalts.

6. *Kit-of-Parts* zur Herstellung einer Bitumenmischung, insbesondere nach einem der Ansprüche 1 bis 4, enthaltend
A) einen Naturasphalt und
B) ein Modifizierungsmittel,
wobei das Modifizierungsmittel mindestens ein Polymer und mindestens eine unpolare, hydrophobe und vorzugsweise viskose Flüssigkeit aufweist oder hieraus besteht.

7. Modifizierungsmittel, **dadurch gekennzeichnet, dass** das Modifizierungsmittel mindestens ein Polymer und mindestens eine unpolare, hydrophobe und vorzugsweise viskose Flüssigkeit aufweist oder hieraus besteht.

8. Modifizierungsmittel nach Anspruch 7, **dadurch gekennzeichnet,**
**dass** das Modifizierungsmittel das Polymer in Mengen von mindestens 2 Gew.%, insbesondere mindestens 5 Gew.%, vorzugsweise mindestens 10 Gew.%, bezogen auf das Modifizierungsmittel, enthält und/der
**dass** das Modifizierungsmittel das Polymer in Mengen im Bereich von 2 bis 50 Gew.%, insbesondere 5 bis 40 Gew.%, vorzugsweise 10 bis 35 Gew.%, bezogen auf das Modifizierungsmittel, enthält.

9. Verwendung eines Modifizierungsmittels nach einem der Ansprüche 7 oder 8 zur Herstellung einer Bitumenmischung nach einem der Ansprüche 1 bis 4.

10. Verfahren zur Herstellung eines Modifizierungsmittels, aufweisend oder bestehend aus mindestens einem Polymer und mindestens einer unpolaren, hydrophoben und vorzugsweise viskosen Flüssigkeit, insbesondere nach einem der Ansprüche 7 oder 8 und/oder geeignet für eine Verwendung nach Anspruch 9,
**dadurch gekennzeichnet,**
**dass** die unpolare, hydrophobe und vorzugsweise viskose Flüssigkeit mit dem Polymer versetzt wird.

11. Verfahren nach Anspruch 10, **dadurch gekennzeichnet,**
**dass** das Polymer in der unpolaren, hydrophoben und vorzugsweise viskosen Flüssigkeit gelöst oder dispergiert wird, vorzugsweise gelöst wird und/oder
**dass** die Flüssigkeit mit dem Polymer in einem Verhältnis von 1:2 bis 10:1, insbesondere 1:1 bis 5:1, vorzugsweise 2:1 bis 4:1, bezogen auf die jeweils eingesetzten Massen von Flüssigkeit und Polymer, versetzt werden.

12. Verfahren nach einem der vorangehenden Ansprüche, **dadurch gekennzeichnet,**
**dass** die Flüssigkeit durch Extraktion des Polymers mit dem Polymer versetzt, vorzugsweise modifiziert, insbesondere mit dem Polymer angereichert, wird und/oder
**dass** das Versetzen der Flüssigkeit mit dem Polymer, insbesondere das Extrahieren des Polymers, bei Temperaturen von mindestens 120 °C, insbesondere mindestens 140 °C, vorzugsweise mindestens 160 °C, bevorzugt mindestens 180 °C, erfolgt.

13. Verfahren nach einem der vorangehenden Ansprüche, **dadurch gekennzeichnet, dass** in der Flüssigkeit unlösliches Polymer, insbesondere unlösliche Polymerbestandteile, durch Dekantieren, Filtrieren, Destillieren, insbesondere unter vermindertem Druck, von der Flüssigkeit abgetrennt wird bzw. werden.

14. Verfahren zur Herstellung einer Bitumenmischung, enthaltend einen Naturasphalt und ein Modifizierungsmittel, nach einem der Ansprüchen 1 bis 4,
**dadurch gekennzeichnet,**
der Naturasphalt mit dem Modifizierungsmittel vermischt wird.

15. Asphalt, insbesondere zur Verwendung im Straßenbau, enthaltend
I) eine Bitumenmischung nach einem der Ansprüche 1 bis 4 und
II) eine Gesteinskörnung.

16. Verwendung eines Asphalts nach Anspruch 15 im Baubereich, im Straßenbau, insbesondere als Asphaltbelag und/oder Asphaltbelagzusatz und/oder als Reparaturasphalt.

17. Verfahren zur Herstellung eines Asphalts nach Anspruch 15, enthaltend eine Bitumenmischung nach einem der Ansprüche 1 bis 4 und eine Gesteinskörnung,
**dadurch gekennzeichnet,**
**dass** die Gesteinskörnung mit der Bitumenmischung bei Temperaturen von weniger als 230 °C vermengt wird.

## Geänderte Patentansprüche

### Geänderte Patentansprüche gemäss Regel 137(2) EPÜ.

1. Bitumenmischung, enthaltend
a) einen Naturasphalt und
b) ein Modifizierungsmittel,
wobei das Modifizierungsmittel mindestens ein Polymer, ausgewählt aus der Gruppe von Naturkautschuken, Synthesekautschuken, deren Regeneraten, Rezyklaten, Vulkanisaten, Homopolymeren, Heteropolymeren, Co-Polymeren und deren Mischungen, und mindestens eine unpolare, hydrophobe und vorzugsweise viskose Flüssigkeit, ausgewählt aus der Gruppe von Ölen, Harzen, Wachsen und deren Mischungen, aufweist oder hieraus besteht.

2. Bitumenmischung nach Anspruch 1, **dadurch gekennzeichnet, dass** der Naturasphalt ausgewählt ist aus der Gruppe von Albertit, Asphaltit, Gilsonit, Grahamit, Impsonit, Leyteit, Libollit, McKittrit, Nigrit, Rafealit, Tabbyit, Uintahit, Wurtzilit, deren Raffinaten und Mischungen, insbesondere aus Asphaltit, Gilsonit, Grahamit, Uintahit, deren Raffinaten und deren Mischungen, vorzugsweise Asphaltit, Gilsonit, Uintahit, deren Raffinaten und deren Mischungen.

3. Bitumenmischung nach einem der Ansprüche 1 oder 2, **dadurch gekennzeichnet, dass** die unpolare, hydrophobe und vorzugsweise viskose Flüssigkeit aus der Gruppe von, insbesondere hochviskosen, Ölen, Harzen, und deren Mischungen, ausgewählt ist.

4. Bitumenmischung nach einem der vorangehenden Ansprüche, **dadurch gekennzeichnet,**
**dass** die Bitumenmischung das Modifizierungsmittel in Mengen im Bereich von 20 bis 90 Gew.%, insbesondere 30 bis 80 Gew.%, vorzugsweise 40 bis 70 Gew.%, bezogen auf die Bitumenmischung, enthält und/oder
**dass** die Bitumenmischung den Naturasphalt in Mengen im Bereich von 20 bis 80 Gew.%, insbesondere 30 bis 70 Gew.%, vorzugsweise 40 bis 60 Gew.%, bezogen auf die Bitumenmischung, enthält.

5. Verwendung einer Bitumenmischung nach einem der vorangehenden Ansprüche zur Herstellung eines Asphalts.

6. *Kit-of-Parts* zur Herstellung einer Bitumenmischung, insbesondere nach einem der Ansprüche 1 bis 4, enthaltend
A) einen Naturasphalt und
B) ein Modifizierungsmittel,
wobei das Modifizierungsmittel mindestens ein Polymer, ausgewählt aus der Gruppe von Naturkautschuken, Synthesekautschuken, deren Regeneraten, Rezyklaten, Vulkanisaten, Homopolymeren, Heteropolymeren, Co-Polymeren und deren Mischungen, und mindestens eine unpolare, hydrophobe und vorzugsweise viskose Flüssigkeit, ausgewählt aus der Gruppe von Ölen, Harzen, Wachsen und deren Mischungen, aufweist oder hieraus besteht.

7. Modifizierungsmittel, **dadurch gekennzeichnet, dass** das Modifizierungsmittel mindestens ein Polymer, ausgewählt aus der Gruppe von Naturkautschuken, Synthesekautschuken, deren Regeneraten, Rezyklaten, Vulkanisaten, Homopolymeren, Heteropolymeren, Co-Polymeren und deren Mischungen, und mindestens eine unpolare, hydrophobe und vorzugsweise viskose Flüssigkeit, ausgewählt aus der Gruppe von Ölen, Harzen, Wachsen und deren Mischungen, aufweist oder hieraus besteht.

8. Modifizierungsmittel nach Anspruch 7, **dadurch gekennzeichnet,**
**dass** das Modifizierungsmittel das Polymer in Mengen von mindestens 2 Gew.%, insbesondere mindestens 5 Gew.%, vorzugsweise mindestens 10 Gew.%, bezogen auf das Modifizierungsmittel, enthält und/der
**dass** das Modifizierungsmittel das Polymer in Mengen im Bereich von 2 bis 50 Gew.%, insbesondere 5 bis 40 Gew.%, vorzugsweise 10 bis 35 Gew.%, bezogen auf das Modifizierungsmittel, enthält.

9. Verwendung eines Modifizierungsmittels nach einem der Ansprüche 7 oder 8 zur Herstellung einer Bitumenmischung nach einem der Ansprüche 1 bis 4.

10. Verfahren zur Herstellung eines Modifizierungsmittels, aufweisend oder bestehend aus mindestens einem Polymer und mindestens einer unpolaren, hydrophoben und vorzugsweise viskosen Flüssigkeit nach einem der Ansprüche 7 oder 8 und/oder geeignet für eine Verwendung nach Anspruch 9,
**dadurch gekennzeichnet,**
**dass** die unpolare, hydrophobe und vorzugsweise viskose Flüssigkeit mit dem Polymer versetzt wird, wobei die Flüssigkeit durch Extraktion des Polymers mit dem Polymer angereichert und wobei das Polymer in der unpolaren, hydrophoben und vorzugsweise viskosen Flüssigkeit gelöst oder dispergiert wird.

11. Verfahren nach Anspruch 10, **dadurch gekennzeichnet,**
**dass** das Polymer in der unpolaren, hydrophoben und vorzugsweise viskosen Flüssigkeit gelöst wird und/oder
**dass** die Flüssigkeit mit dem Polymer in einem Verhältnis von 1:2 bis 10:1, insbesondere 1:1 bis 5:1, vorzugsweise 2:1 bis 4:1, bezogen auf die jeweils eingesetzten Massen von Flüssigkeit und Polymer, versetzt werden.

12. Verfahren nach einem der vorangehenden Ansprüche, **dadurch gekennzeichnet, dass** das Versetzen der Flüssigkeit mit dem Polymer, insbesondere das Extrahieren des Polymers, bei Temperaturen von mindestens 120 °C, insbesondere mindestens 140 °C, vorzugsweise mindestens 160 °C, bevorzugt mindestens 180 °C, erfolgt.

13. Verfahren nach einem der vorangehenden Ansprüche, **dadurch gekennzeichnet, dass** in der Flüssigkeit unlösliches Polymer, insbesondere unlösliche Polymerbestandteile, durch Dekantieren, Filtrieren, Destillieren, insbesondere unter vermindertem Druck, von der Flüssigkeit abgetrennt wird bzw. werden.

14. Verfahren zur Herstellung einer Bitumenmischung, enthaltend einen Naturasphalt und ein Modifizierungsmittel, nach einem der Ansprüchen 1 bis 4,
**dadurch gekennzeichnet,**
der Naturasphalt mit dem Modifizierungsmittel vermischt wird.

15. Asphalt, insbesondere zur Verwendung im Straßenbau, enthaltend
I) eine Bitumenmischung nach einem der Ansprüche 1 bis 4 und
II) eine Gesteinskörnung.

16. Verwendung eines Asphalts nach Anspruch 15 im Baubereich, im Straßenbau, insbesondere als Asphaltbelag und/oder Asphaltbelagzusatz und/oder als Reparaturasphalt.

17. Verfahren zur Herstellung eines Asphalts nach Anspruch 15, enthaltend eine Bitumenmischung nach einem der Ansprüche 1 bis 4 und eine Gesteinskörnung,
**dadurch gekennzeichnet,**
**dass** die Gesteinskörnung mit der Bitumenmischung bei Temperaturen von weniger als 230 °C vermengt wird.
